# EUROPÄISCHE PATENTSCHRIFT

(11) **EP 3 568 338 B1**
(45) Veröffentlichungstag und Bekanntmachung des Hinweises auf die Patenterteilung: **25.08.2021**
(21) Anmeldenummer: 17808069.3
(22) Anmeldetag: 01.12.2017
(51) Int. Cl.: B62D 25/04, B62D 29/04

(54) **SPRIEGEL EINES KRAFTFAHRZEUGS**
BOW OF A MOTOR VEHICLE
ARCEAU DE VÉHICULE À MOTEUR

(30) Priorität: 11.01.2017 DE 102017200368
(43) Veröffentlichungstag der Anmeldung: 20.11.2019
(73) Patentinhaber: Bayerische Motoren Werke Aktiengesellschaft, 80809 München (DE)
(72) Erfinder: HOGGER, Thomas, 83624 Otterfing (DE); SCHNEIDER, Constantin, 50739 Köln / Nordrhein-Westfalen (DE)
(86) Internationale Anmeldenummer: PCT/EP2017/081155
(87) Internationale Veröffentlichungsnummer: WO 2018/130339

(56) Entgegenhaltungen:
- WO-A1-2013/029695
- DE-A1-102004 008 006
- DE-A1-102007 022 385
- DE-A1-102009 052 110
- KR-A- 20160 041 938

## Beschreibung

Die Erfindung betrifft einen Spriegel für ein Kraftfahrzeug.

Spriegel werden in der Kraftfahrzeugtechnik seit vielen Jahren eingesetzt. Insbesondere dienen sie als Hohlkörper zur Versteifung von bestimmten Bereichen, z.B. von Vertikalsäulen (A-, B-, C-Säule) oder von Dachkonstruktionen.

Druckschriftlicher Stand der Technik im vorliegenden technischen Gebiet, welcher den Oberbegriff des Anspruchs 1 widerspiegelt, ist in den Dokumenten DE 10 2004 008 006 A1, KR 2016 0041 938 A und DE 10 2009 052 110 A1 offenbart.

Bekannte Spriegel der Kraftfahrzeugtechnik erfüllen ihre Aufgabe, sind jedoch vergleichsweise teuer und weisen ein hohes Gewicht auf. Beispielsweise werden Flechtbauteile, mehrschalige Nasspressbauteile oder im Innenhochdruckumformungsverfahren erzeugte räumliche Körper eingesetzt.

Der Erfindung liegt deshalb die Aufgabe zugrunde, einen Spriegel für ein Kraftfahrzeug bereit zu stellen, der über eine hohe Steifigkeit verfügt und großserientauglich produzierbar ist.

Diese Aufgabe wird durch die Merkmalskombination gemäß Patentanspruch 1 gelöst.

Erfindungsgemäß wird ein Spriegel eines Kraftfahrzeugs vorgeschlagen, der ein faserverstärktes Kunststoffoberband, ein faserverstärktes Kunststoffunterband und eine das Kunststoffoberband und das Kunststoffunterband verbindende Spritzgussrippenstruktur umfasst. Insbesondere ist der erfindungsgemäße Spriegel als B-Säulenspriegel ausgebildet. Die Spritzgussrippenstruktur ist an das Kunststoffunterband und das Kunststoffoberband angespritzt und weist in einer günstigen Ausführungsvariante im seitlichen Querschnitt entlang der Längsrichtung des Spriegels gesehen gegenüber dem Kunststoffunterband und dem Kunststoffoberband gewinkelt verlaufende Versteifungsstege auf. In diesem seitlichen Querschnitt gesehen bilden jeweils zwei benachbarte gewinkelte Versteifungsstege mit dem Kunststoffunterband oder dem Kunststoffoberband jeweils eine als Dreieck ausgebildete lokale Versteifungseinheit. Die Versteifungsstege verbinden das Kunststoffunterband und das Kunststoffoberband unmittelbar.

Ein derartiger Spriegel entspricht einem CFRTP-Bauteil (CFRP = Carbon fiber reinforced plastics), bei dem die Ober- und Unterbänder aus faserverstärktem Kunststoff, vorzugsweise mit eine thermoplastische Matrix aufweisenden Kohlefasern, mit der Spritzgussrippenstruktur im Spritzgusswerkzeug verbunden werden. Die Spritzgussrippenstruktur ist in einer bevorzugten Ausführung aus einem Thermoplast gebildet.

Das Kunststoffoberband und das Kunststoffunterband sind in einer Ausführungsvariante aus Endlosmaterial gebildet und nach gewünschter Erstreckung in Längsrichtung auf die vorbestimmte Läge des Spriegels abgeschnitten. Als Material kommt insbesondere CFK zum Einsatz.

In einer Ausführung der Erfindung ist vorgesehen, dass sich die Versteifungsstege der Spritzgussrippenstruktur über eine gesamte Breite in Querrichtung des Spriegels erstrecken. Zudem erstrecken sich das Kunststoffoberband und das Kunststoffunterband über die gesamte Breite der Spritzgussrippenstruktur. Als Breite wird hierbei eine Richtung senkrecht zur Längsrichtung und senkrecht zur Dickenrichtung definiert.

Ferner ist in einer Ausführungsvariante vorgesehen, dass jeweils zwei benachbarte Versteifungsstege gewinkelt zueinander verlaufen und an dem Kunststoffunterband oder dem Kunststoffoberband an einem Verbindungspunkt verbunden sind. Dabei sind die Versteifungsstege an dem Verbindungspunkt an dem Kunststoffunterband oder dem Kunststoffoberband angespritzt. Über den Verbindungspunkt sind die Versteifungsstege nicht nur mit dem Kunststoffunterband oder dem Kunststoffoberband, sondern auch miteinander verbunden und ermöglichen eine fachwerkähnliche Kraftverteilung, wobei der Verbindungspunkt als Knotenpunkt wirkt. Die Versteifungsstege verlaufen vorzugsweise gegenüber einer senkrechten Verbindung zwischen dem Kunststoffoberband und dem Kunststoffunterband in einem Winkel von 30-60°, weiter bevorzugt in einem Winkel von 40-50°.

In einer günstigen Ausführung des Spriegels sind über die Längsrichtung des Spriegels gesehen wiederkehrend eine Vielzahl von Versteifungseinheiten vorgesehen. Jeder einzelne Versteifungssteg der jeweiligen Versteifungseinheit erstreckt sich dabei über die gesamte Breite des Spriegels. Zudem sind die jeweils zwei aufeinander zulaufenden gewinkelten Versteifungsstege an einem Verbindungspunkt an dem Kunststoffoberband oder dem Kunststoffunterband befestigt.

Ferner ist fertigungstechnisch günstig, dass die Vielzahl von Versteifungseinheiten in Längsrichtung gesehen jeweils beabstandet zueinander angeordnet sind. Das bedeutet, dass die Versteifungsstege in Längsrichtung gesehen nicht fortlaufend, sondern nach jeweils zwei zueinander gewinkelten Versteifungsstegen ein Abstand vorgesehen ist. Um die Spritzgussrippenstruktur im Spritzgussverfahren zwischen das faserstärkte Kunststoffunterband und das faserverstärkte Kunststoffoberband einbringen zu können, werden das Kunststoffunterband und das Kunststoffoberband in ein Spritzwerkzeug mit einem Werkzeugoberteil und einem Werkzeugunterteil eingelegt. Das Werkzeugoberteil und das Werkzeugunterteil umfassen jeweils Eingriffsmittel zum Eingriff von der Seite zwischen das Kunststoffunterband und das Kunststoffoberband. Die Eingriffsmittel weisen eine komplementäre Form mit zueinander vorbestimmtem Versatz als Einspritz-Freilassungen auf, wobei der Kunststoff in die Einspritz-Freilassungen eingespritzt wird. Die Eingriffsmittel können dann wieder seitlich aus dem Bereich zwischen dem Kunststoffunterband und dem Kunststoffoberband herausgezogen werden.

Zur Gewährleistung einer gleichmäßigen Steifigkeit über die Länge des Spriegels in Längsrichtung ist eine Ausführung vorteilhaft, bei der die Versteifungseinheiten identisch ausgebildet sind.

Zur Anbindung des Spriegels an angrenzende Kraftfahrzeugteile umfasst er an seinen jeweiligen Längsenden Befestigungselemente, die das Kunststoffunterband und das Kunststoffoberband in Längsrichtung abschnittsweise umschließen bzw. formschlüssig beispielsweise über Befestigungsstege daran angebunden und befestigbar sind. Die Befestigungselemente sind in einem Ausführungsbeispiel als Abschluss- oder Randhülsen ausgebildet, die beispielsweise an dem Kunststoffunterband und dem Kunststoffoberband verklebt werden. In einer alternativen Ausführung kann ein gelochtes Tiefziehelement, vorzugsweise ein gelochtes Tiefziehblech eingesetzt werden, das mit Kunststoff umspritzt den Formschluss mit dem Spriegel herstellt.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine perspektivische Ansicht eines B-Säulenspriegels;
- Fig. 2: eine Seitenansicht eines B-Säulenspriegels;
- Fig. 3: ein Werkzeug zur Herstellung des B-Säulenspriegels nach Fig. 1 oder Fig. 2.

Die Figuren sind beispielhaft schematisch. Gleiche Bezugszeichen benennen gleiche Teile in allen Ansichten.

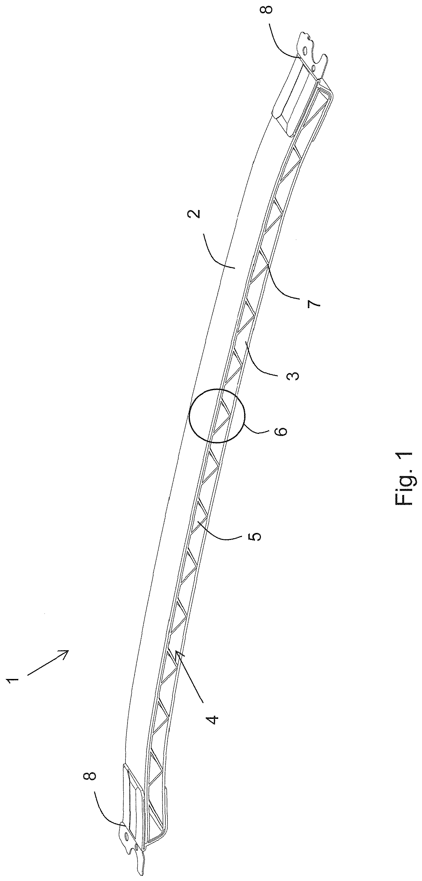

In Figur 1 ist in einer perspektivischen Ansicht ein Spriegel 1, ausgebildet als B-Säulenspriegel, eines Kraftfahrzeugs dargestellt. Der Spriegel 1 ist mehrteilig und gebildet aus dem faserverstärkten Kunststoffoberband 2, dem faserverstärkten Kunststoffunterband 3 und der Spritzgussrippenstruktur 4, über die das Kunststoffoberband 2 und das Kunststoffunterband 3 unmittelbar verbunden sind. An den in Längsrichtung gesehen äußeren Rändern des Spriegels 1 sind als Befestigungselemente ausgebildete und das Kunststoffoberband 2 und das Kunststoffunterband 3 übergreifende gelochte Tiefziehbleche 8 befestigt, deren Stege die Ober- und Unterseite des Kunststoffoberbands 2 und des Kunststoffunterbands 3 formschlüssig übergreifen, wobei die Seitenbereiche jedoch offen bleiben. Über die Randhülsen 8 ist der Spriegel 1 im Fahrzeug montierbar. Zudem sind andere Bauteile am Spriegel 1 befestigbar.

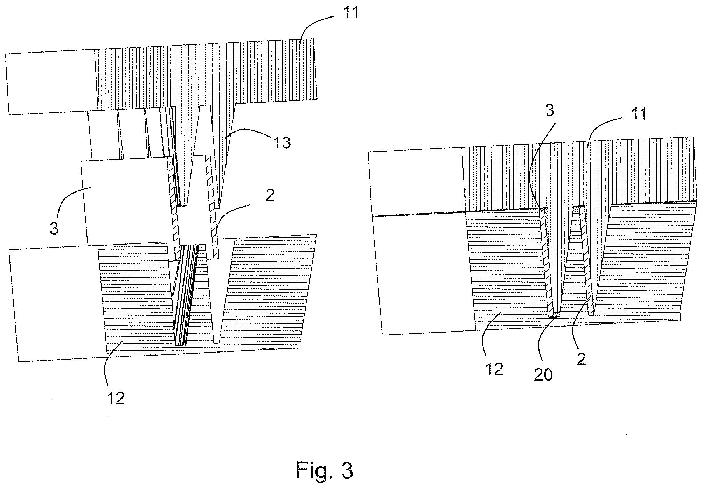

Die Spritzgussrippenstruktur 4 wird über ein in Figur 3 schematisch dargestelltes Werkzeug an das Kunststoffoberband 2 und das Kunststoffunterband 3 angespritzt und weist eine in Längsrichtung gesehen wiederkehrende durch Versteifungsstege 5 gebildete Dachstruktur auf, die durch die im seitlichen Querschnitt gesehen gegenüber dem Kunststoffunterband 3 und dem Kunststoffoberband 2 gewinkelt verlaufende Versteifungsstege 5 gebildet wird. Jeweils zwei benachbarte Versteifungsstege 5 treffen am Verbindungspunkt 7 an dem Kunststoffunterband 3 aufeinander, sind miteinander verbunden und an dem Kunststoffunterband 3 angespritzt. In einer seitlichen Ansicht bilden jeweils zwei verbundene Versteifungsstege 5 mit dem Kunststoffoberband 2 jeweils eine als Dreieck ausgebildete lokale Versteifungseinheit 6.

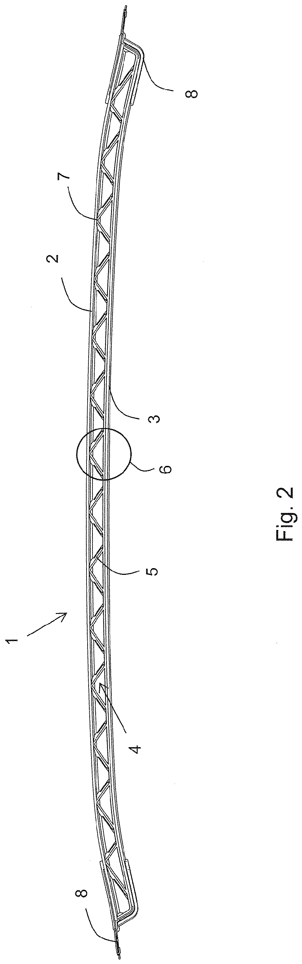

Die Ausführung gemäß Figur 2 ist identisch zu Figur 1 bis auf, dass die jeweils zwei verbundenen Versteifungsstege 5 mit dem Kunststoffunterband 3 die jeweils als Dreieck ausgebildete lokale Versteifungseinheit 6 bilden. In beiden Ausführungen sind über die Längsrichtung des Spriegels 1 gesehen wiederkehrend eine Vielzahl von identisch ausgebildeten und zueinander beabstandete Versteifungseinheiten 6 vorgesehen. Zudem ist in Figur 2 gut zu erkennen, dass der Spriegel 1 über seine Erstreckung in Längsrichtung gekrümmt ist, wobei die Krümmung zu den Außenrandabschnitten jeweils zunimmt.

Die Versteifungsstege 5 sind jeweils plattenförmig und verlaufen jeweils symmetrisch gegenüber einer senkrechten Verbindung zwischen dem Kunststoffoberband 2 und dem Kunststoffunterband 3 in einem Winkel von 50° vom Kunststoffoberband 2 zum Kunststoffunterband 3. Die durch die Versteifungsstege 5 gebildete der Spritzgussrippenstruktur 4 erstreckt sich über die gesamte Breite in Querrichtung des Spriegels 1 und wird ober- und unterseitig vollständig flächig von dem Kunststoffoberband 2 und dem Kunststoffunterband 3 überdeckt. Die Außenflächen des Kunststoffoberbands 2 und des Kunststoffunterbands 3 sind flach und eben.

In Figur 3 ist schematisch ein Werkzeug zum Spritzgießen der Spritzgussrippenstruktur 4 an das Kunststoffoberband 2 und dem Kunststoffunterband 3 dargestellt. Das Werkzeug umfasst ein Werkzeugoberteil 11 und ein Werkzeugunterteil 12, die jeweils seitliche Eingriffsstrukturen 13 aufweisen, die seitlich in den Zwischenraum zwischen die in das Werkzeug eingelegten Kunststoffober- und unterbänder 2, 3 greifen und miteinander Einspritz-Freilassungen bereitstellen, in den dann der thermoplastische Kunststoff 20 zur Bildung der Spritzgussrippenstruktur 4 eingespritzt wird. Die Eingriffsstrukturen 13 werden anschließend wieder seitlich aus dem Bereich zwischen dem Kunststoffunterband 2 und dem Kunststoffoberband 3 herausgezogen und der Spriegel 1 aus dem Werkzeug entnommen.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Beispielsweise sind auch alternative Anschlussmittel an dem Spriegel 1 anbringbar, insbesondere verschraubbare Flansche.

## Patentansprüche

1. Spriegel eines Kraftfahrzeugs umfassend ein faserverstärktes Kunststoffoberband (2), ein faserverstärktes Kunststoffunterband (3) und eine das Kunststoffoberband und das Kunststoffunterband (3) verbindende Spritzgussrippenstruktur (4), wobei die Spritzgussrippenstruktur an das Kunststoffunterband (3) und das Kunststoffoberband (2) angespritzt ist, **dadurch gekennzeichnet, dass** der Spriegel an seinen jeweiligen Längsenden Befestigungselemente aus Stahlblech aufweist, die im Spritzgussverfahren formschlüssig an das Kunststoffunterband (3) und das Kunststoffoberband (2) angebunden sind.

2. Spriegel nach Anspruch 1, **dadurch gekennzeichnet, dass** die Spritzgussrippenstruktur (4) im seitlichen Querschnitt gesehen gegenüber dem Kunststoffunterband (3) und dem Kunststoffoberband (2) gewinkelt verlaufende Versteifungsstege (5) aufweist, wobei im seitlichen Querschnitt gesehen jeweils zwei benachbarte gewinkelte Versteifungsstege (5) mit dem Kunststoffunterband (3) oder dem Kunststoffoberband (2) jeweils eine als Dreieck ausgebildete lokale Versteifungseinheit (6) bilden.

3. Spriegel nach Anspruch 1 oder 2, **dadurch gekennzeichnet, dass** sich die Versteifungsstege (5) der Spritzgussrippenstruktur (4) über eine gesamte Breite in Querrichtung des Spriegels (1) erstrecken.

4. Spriegel nach einem der Ansprüche 1 bis 3, **dadurch gekennzeichnet, dass** jeweils zwei benachbarte Versteifungsstege (5) gewinkelt zueinander verlaufen und an dem Kunststoffunterband (3) oder dem Kunststoffoberband (2) an einem Verbindungspunkt (7) verbunden sind, wobei die Versteifungsstege (5) an dem Verbindungspunkt (7) an dem Kunststoffunterband (3) oder dem Kunststoffoberband (2) angespritzt sind.

5. Spriegel nach einem der vorigen Ansprüche, **dadurch gekennzeichnet, dass** über die Längsrichtung des Spriegels (1) gesehen wiederkehrend eine Vielzahl von Versteifungseinheiten (6) vorgesehen sind.

6. Spriegel nach dem vorigen Anspruch, **dadurch gekennzeichnet, dass** die Vielzahl von Versteifungseinheiten (6) in Längsrichtung gesehen jeweils beabstandet zueinander angeordnet sind.

7. Spriegel nach einem der vorigen Ansprüche 4 bis 5, **dadurch gekennzeichnet, dass** die Versteifungseinheiten (6) identisch ausgebildet sind.

8. Spriegel nach einem der vorigen Ansprüche, **dadurch gekennzeichnet, dass** die Versteifungsstege (5) gegenüber einer senkrechten Verbindung zwischen dem Kunststoffoberband (2) und dem Kunststoffunterband (3) in einem Winkel von 30-60° verlaufen.

9. Spriegel nach einem der vorigen Ansprüche, **dadurch gekennzeichnet, dass** er ausgebildet ist als B-Säulenspriegel.

## Claims

1. Bow of a motor vehicle, comprising a fibre-reinforced plastics-material upper band (2), a fibre-reinforced plastics-material lower band (3), and an injection-moulded rib structure (4) that connects the plastics-material upper band and the plastics-material lower band (3), wherein the injection-moulded rib structure is injection-moulded to the plastics-material lower band (3) and the plastics-material upper band (2), **characterized in that** the bow at the respective longitudinal ends thereof has fastening elements of sheet steel which by the injection-moulding method are linked in a form-fitting manner to the plastics-material lower band (3) and the plastics-material upper band (2).

2. Bow according to Claim 1, **characterized in that** the injection-moulded rib structure (4), when viewed in the lateral cross section, has reinforcement webs (5) which run so as to be angled in relation to the plastics-material lower band (3) and the plastics-material upper band (2), wherein, when viewed in the lateral cross section, in each case two neighbouring angled reinforcement webs (5) conjointly with the plastics-material lower band (3) or the plastics-material upper band (2) form one local reinforcement unit (6) which is in each case configured as a triangle.

3. Bow according to Claim 1 or 2, **characterized in that** the reinforcement webs (5) of the injection-moulded rib structure (4) extend across an entire width in the transverse direction of the bow (1).

4. Bow according to one of Claims 1 to 3, **characterized in that** in each case two neighbouring reinforcement webs (5) run so as to be mutually angled and are connected at a connection point (7) on the plastics-material lower band (3) or the plastics-material upper band (2), wherein the reinforcement webs (5) at the connection point (7) are injection-moulded to the plastics-material lower band (3) or the plastics-material upper band (2).

5. Bow according to one of the preceding claims, **characterized in that**, when viewed across the longitudinal direction of the bow (1), a multiplicity of reinforcement units (6) are repeatedly provided.

6. Bow according to the preceding claim, **characterized in that** the multiplicity of reinforcement units (6), when viewed in the longitudinal direction, are in each case disposed so as to be mutually spaced apart.

7. Bow according to either of preceding Claims 4 and 5, **characterized in that** the reinforcement units (6) are of identical configuration.

8. Bow according to one of the preceding claims, **characterized in that** the reinforcement webs (5) run at an angle of 30 to 60° in relation to a perpendicular connection between the plastics-material upper band (2) and the plastics-material lower band (3).

9. Bow according to one of the preceding claims, **characterized in that** said bow is configured as a B-pillar bow.

## Revendications

1. Arceau d'un véhicule automobile, comprenant une bande supérieure en matière plastique renforcée par des fibres (2), une bande inférieure en matière plastique renforcée par des fibres (3) et une structure nervurée moulée par injection (4) reliant la bande supérieure en matière plastique et la bande inférieure en matière plastique (3), la structure nervurée moulée par injection étant moulée par injection sur la bande inférieure en matière plastique (3) et la bande supérieure en matière plastique (2),
**caractérisé en ce que** l'arceau présente à ses extrémités longitudinales respectives des éléments de fixation en tôle d'acier qui sont rattachés en complémentarité de forme à la bande inférieure en matière plastique (3) et à la bande supérieure en matière plastique (2) par un procédé de moulage par injection.

2. Arceau selon la revendication 1, **caractérisé en ce que**, vue en section transversale latérale, la structure nervurée moulée par injection (4) présente des entretoises de renforcement (5) s'étendant selon un angle par rapport à la bande inférieure en matière plastique (3) et à la bande supérieure en matière plastique (2), dans lequel, vues en section transversale latérale, respectivement deux entretoises de renforcement (5) voisines forment avec la bande inférieure en matière plastique (3) ou la bande supérieure en matière plastique (2) respectivement une unité de renforcement (6) locale, réalisée sous forme de triangle.

3. Arceau selon la revendication 1 ou 2, **caractérisé en ce que** les entretoises de renforcement (5) de la structure nervurée moulée par injection (4) s'étendent sur une largeur totale dans la direction transversale de l'arceau (1).

4. Arceau selon l'une quelconque des revendications 1 à 3, **caractérisé en ce que** respectivement deux entretoises de renforcement voisines (5) s'étendent selon un angle l'une par rapport à l'autre et sont reliées à la bande inférieure en matière plastique (3) ou à la bande supérieure en matière plastique (2) en un point de liaison (7), les entretoises de renforcement (5) étant moulées par injection sur la bande inférieure en matière plastique (3) ou la bande supérieure en matière plastique (2) au point de liaison (7).

5. Arceau selon l'une quelconque des revendications précédentes, **caractérisé en ce que**, vue sur la direction longitudinale de l'arceau (1), une pluralité d'unités de renforcement (6) est prévue de manière récurrente.

6. Arceau selon la revendication précédente, **caractérisé en ce que** la pluralité d'unités de renforcement (6) est disposée respectivement à distance les unes des autres, vues dans la direction longitudinale.

7. Arceau selon l'une quelconque des revendications précédentes 4 et 5, **caractérisé en ce que** les unités de renforcement (6) sont réalisées de manière identique.

8. Arceau selon l'une quelconque des revendications précédentes, **caractérisé en ce que** les entretoises de renforcement (5) s'étendent par rapport à une liaison verticale entre la bande supérieure en matière plastique (2) et la bande inférieure en matière plastique (3) selon un angle de 30 à 60°.

9. Arceau selon l'une quelconque des revendications précédentes, **caractérisé en ce qu'**il est réalisé sous forme d'arceau de montant B.
